# EUROPEAN PATENT APPLICATION

(11) **EP 4 589 708 A1**
(43) Date of publication of application: **23.07.2025**
(21) Application number: 24217750.9
(22) Date of filing: 05.12.2024
(51) Int. Cl.: H01M 10/052, H01M 50/30, H01M 50/531, H01M 50/536, H01M 50/574, H01M 10/04, H01M 50/578, H01M 50/627

(54) **CURRENT COLLECTOR DISK AND BATTERY**

(30) Priority: 18.12.2023 CN 202323459800 U; 03.07.2024 WO PCT/CN2024/103371
(71) Applicant: Eve Energy Co., Ltd., Huizhou, Guangdong 516006 (CN)
(72) Inventor: LI, Jidong, Huizhou, Guangdong 516006 (CN); FU, Zhibo, Huizhou, Guangdong 516006 (CN); WANG, Xingjian, Huizhou, Guangdong 516006 (CN); SONG, Pengyuan, Huizhou, Guangdong 516006 (CN)
(74) Representative: Berggren Oy

(57) **Abstract**

Provided are a current collector disk and a battery. The current collector disk includes a body (100) including a first current collecting area (10) and a second current collecting area (20), where the second current collecting area (20) is disposed around at least part of the first current collecting area (10). The body (100) further includes multiple pressure relief slots (101) disposed in the first current collecting area (10) and spaced apart. Each of the pressure relief slots (101) includes a first slot tube (1011), a second slot tube (1012), and a slot body (1013), and the circle center of a circular arc where the slot body (1013) is located is located on a side of the slot body (1013) closer to the second current collecting area (20).

## Description

### TECHNICAL FIELD

The present application relates to the field of current collector disks, and for example, to a current collector disk and a battery.

### BACKGROUND

Compared with traditional batteries such as nickel-cadmium batteries and lead-acid batteries, lithium-ion batteries have the advantages of high energy density, high operating voltage, low self-discharge rate, long cycle life, high charging and discharging efficiency, wide range of operating temperature, and low environmental pollution. At present, lithium-ion batteries have been widely used in cell phones, laptops and other computer, communication, and consumer electronics (3C products) and new energy vehicles, and also have broad application prospects in aerospace fields such as civil aircrafts, unmanned aerial vehicles and space probes.

### SUMMARY

At present, the current collector disk of a lithium battery is usually welded with electrode tabs. Still, the current collector disk only has a pressure relief center hole, which causes low pressure-relief efficiency and low liquid-injection efficiency.

The present application provides a current collector disk. The current collector disk includes a body.

The body includes a first current collecting area and a second current collecting area, where the second current collecting area is disposed around at least part of the first current collecting area.

The body further includes multiple pressure relief slots disposed in the first current collecting area and spaced apart in a circumferential direction of the first current collecting area. Each of the pressure relief slots includes a first slot tube, a second slot tube, and a slot body, two ends of the slot body communicate with the first slot tube and the second slot tube respectively, the slot body is in an arc shape, and the circle center of a circular arc where the slot body is located is located on a side of the slot body closer to the second current collecting area.

The present application also provides a battery.

The battery includes a current-interrupt device, an electric core, and a current collector disk as described above, the current collector disk being connected to the current-interrupt device and the electric core separately.

The current collector disk provided in the present application includes the body and a conductive portion, where the body includes the first current collecting area and the second current collecting area, and the second current collecting area is disposed around at least part of the first current collecting area. The body further includes multiple pressure relief slots disposed in the first current collecting area and spaced apart in the circumferential direction of the first current collecting area. Each pressure relief slot includes a first slot tube, a second slot tube, and a slot body, and two ends of the slot body communicate with the first slot tube and the second slot tube respectively. The slot body is in an arc shape. The pressure relief slots have the function of relieving pressure and also have the function of injecting electrolyte, and the number of pressure relief slots is more than one, which also increases the area allowing pressure relief and electrolyte injection, and improves the pressure relief efficiency and the efficiency of electrolyte injection.

### BRIEF DESCRIPTION OF THE DRAWINGS

FIG. 1 is a diagram showing the structure of a current collector disk provided by some embodiments of the present application.
FIG. 2 is a diagram showing the structure of another current collector disk provided by some embodiments of the present application.
FIG. 3 is a diagram showing the structure of yet another current collector disk provided by some embodiments of the present application.
FIG. 4A is a schematic diagram of pressure relief slots provided by some embodiments of the present application.
FIG. 4B is an enlarged view of region B in FIG. 4A.
FIG. 4C is another schematic diagram of pressure relief slots provided by some embodiments of the present application.
FIG. 5 is a schematic diagram of welding tracks provided by some embodiments of the present application.
FIG. 6 is a cross-sectional view of a current collector disk provided by some embodiments of the present application.

### Reference numerals are as follows.

100 - body; 10 - first current collecting area; 101 - pressure relief slot; 1011 - first slot tube; 1011a - first sidewall; 1011b - second sidewall; 1012 - second slot tube; 1012a - third sidewall; 1012b - fourth sidewall; 1013 - slot body; 1013a - first curved sidewall; 1013b - second curved sidewall; 1014 - first spacing; 1015 - second spacing; 102 - first connection area; 103 - second connection area; 104 - pressure relief center hole; 20 - second current collecting area; 200 - conductive portion; 300 - welding track.

### DETAILED DESCRIPTION

In the description of the present application, it is to be understood that the terms "on", "below" and the like indicate orientation or position relationships based on those shown in the accompanying drawings. These relationships are intended only to facilitate the description of the present application and to simplify the description, and are not intended to indicate or imply that the referred device or element must have a specific orientation and be constructed and operated in a specific orientation. Therefore, it is not to be construed as limiting the present application. In addition, the terms "first" and "second" are only used for descriptive purposes and are not to be understood as indicating or implying relative importance or implicitly specifying the number of technical features indicated. Thus, the features defined as "first" and "second" may explicitly or implicitly include one or more of the features. In the description of the present application, "plurality" means two or more, unless otherwise expressly and specifically limited.

The present application may repeat reference numerals and/or reference letters in different embodiments, such repetition being for simplicity and clarity and not indicative of a relationship between the various embodiments and/or settings discussed.

A current collector disk and a battery provided in the present application will be described in detail below in connection with specific embodiments and the accompanying drawings. For example, the current collector disk may be used as a positive current collector disk of the battery.

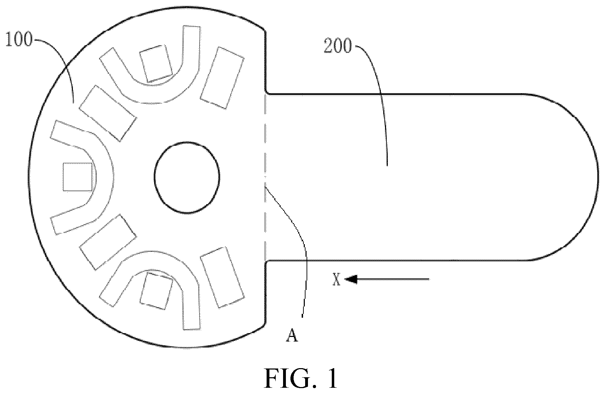

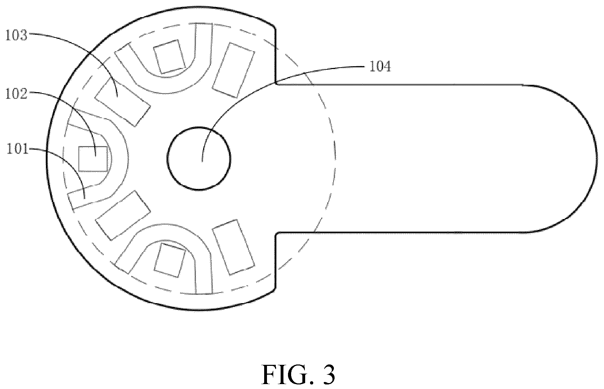

Referring to FIGS. 1-4A, some embodiments of the present application provide a current collector disk. The current collector disk includes a body 100.

The body 100 includes a first current collecting area 10 and a second current collecting area 20, and the second current collecting area 20 is disposed around at least part of the first current collecting area 10. The body 100 further includes multiple pressure relief slots 101 disposed in the first current collecting area 10 and spaced apart in a circumferential direction of the first current collecting area 10. Each pressure relief slot 101 includes a first slot tube 1011, a second slot tube 1012, and a slot body 1013, and two ends of the slot body 1013 communicate with the first slot tube 1011 and the second slot tube 1012 respectively. The slot body 1013 is in an arc shape, and the circle center of a circular arc where the slot body 1013 is located is located on a side of the slot body 1013 closer to the second current collecting area 20.

For example, the slot body 1013 is bent toward the second current collecting area 20, and the two ends of the slot body 1013 are connected to the first slot tube 1011 and the second slot tube 1012 respectively. The first slot tube 1011 and the second slot tube 1012 extend toward the second current collecting area 20. The projection of the pressure relief slot 101 in the first direction Y overlaps with an electric core of a battery when the current collector disk is assembled to the battery, and an electrolyte can be injected into the electric core via the first slot tube 1011, the second slot tube 1012, and the slot body 1013, ensuring that the electrolyte can be injected into various places of the electric core. Moreover, the slot body 1013 is in a smooth arc shape, and the injected electrolyte can, for example, flow along the arc of the slot body 1013 into the first slot tube 1011 and the second slot tube 1012 and then be injected into the electric core, thereby improving the uniformity of the injected electrolyte so that the electrolyte can infiltrate into various portions of the electric core, and improving the efficiency of injection of the electrolyte.

When the electrolyte is injected, the electrolyte spreads around the current collector disk, the multiple pressure relief slots 101 are provided in the first current collecting area 10 and spaced apart in the circumferential direction of the first current collecting area 10, and the electrolyte can flow along the curved slot bodies 1013 into the first slot tubes 1011 and the second slot tubes 1012, which further improves the efficiency of injection of the electrolyte and the uniformity of the injected electrolyte. Referring to FIG. 1, for example, the first current collecting area 10 has a connection surface A whose normal direction is in the second direction X perpendicular to the first direction Y. For example, the projection of the connection surface A in the second direction X is a rectangle. A conductive portion 200 is connected to the connection surface A along the second direction X. For example, the second current collecting area 20 is disposed around the first current collecting area 10 other than the connection surface A.

Referring to FIGS. 1-3, for example, the number of pressure relief slots 101 is, for example, 3 in the embodiments, but the embodiments are not limited to this, and the number of pressure relief slots 101 may be adaptively increased according to the area of the body 100 to improve the efficiency of injection of the electrolyte or the efficiency of pressure relief. The first current collecting area 10 is provided with a pressure relief center hole 104, and a straight-line distance from the center of the pressure relief center hole 104 to the connection surface A is less than a straight-line distance from the center of the pressure relief center hole 104 to an outer edge of the first current collecting area 10, and based on a comparison of the straight-line distances, the pressure relief slots 101 are not provided on a side of the first current collecting area 10 closer to the connection surface A.

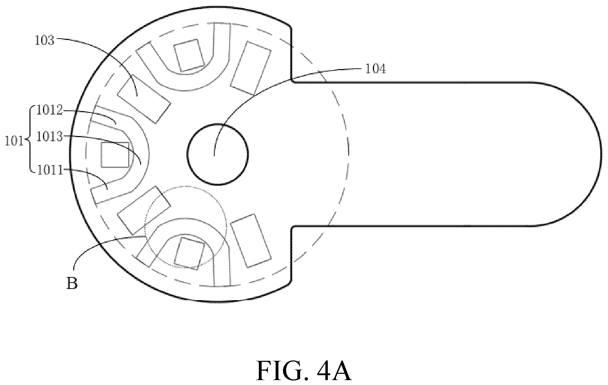

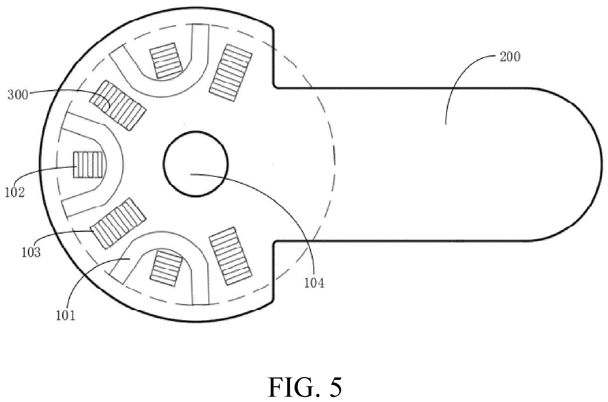

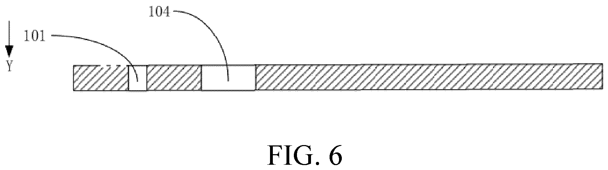

Referring to FIGS. 4A-6, in some optional embodiments of the present application, an end of the first slot tube 1011 and an end of the second slot tube 1012 which are away from the slot body 1013 extend to a side of the second current collecting area 20 closer to the first current collecting area 10.

It is to be understood that the end of the first slot tube 1011 and the end of the second slot tube 1012 away from the pressure relief center hole 104 abut against the side of the second current collecting area 20 closer to the first current collecting area 10. The pressure relief slots 101 are located in the first current collecting area 10 without extending to a side of the second current collecting area 20 away from the first current collecting area 10, which ensures the structure strength of the current collector disk and makes the current collector disk less susceptible to deformation.

For example, the end of the first slot tube 1011 and the end of the second slot tube 1012 away from the slot body 1013 may also not extend to the side of the second current collecting area 20 closer to the first current collecting area 10, i.e., the end of the first slot tube 1011 and the end of the second slot tube 1012 away from the pressure relief center hole 104 each are at a certain distance from the second current collecting area 20, which distance is selected based on the criterion that it does not affect the area of first connection areas 102, the area of second connection areas 103, and the pressure relief center hole 104, depending on the actual application. In some optional embodiments of the present application, the first current collecting area 10 is provided with first connection areas 102 spaced apart in the circumferential direction of the first current collecting area 10. The first connection areas 102 are configured to be connected to electrode tabs of the electric core, and each of the first connection areas 102 is disposed between the first slot tube 1011 and the second slot tube 1012 of a corresponding pressure relief slot 101.

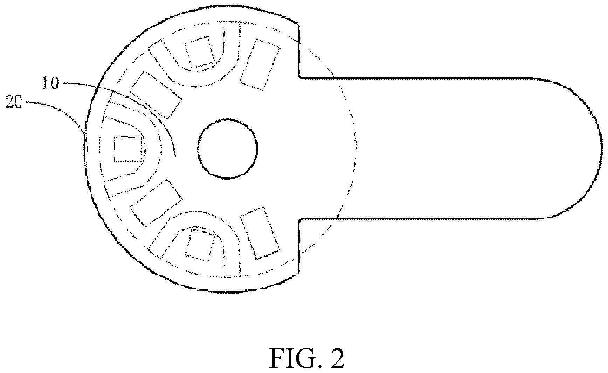

Referring to FIGS. 2-5, for example, the first connection areas 102 are each a welding zone in which a welding track 300 is formed, and the first connection areas 102 are welded to the electrode tabs of the electric core. For example, laser welding may be applied to the welding zone, but the embodiments are not limited thereto.

In some optional embodiments of the present application, a first spacing 1014 exists between the pressure relief slot 101 and a side of the first connection area 102, the side being each of two opposite sides of the first connection area 102 closer to the pressure relief slot 101.

For example, the first connection area 102 is located between the first slot tube 1011 and the second slot tube 1012 and on the side of the slot body 1013 where the slot body 1013 curves toward the second current collecting area 20.

It is to be understood that the first connection area 102 is not connected to the side of the slot body 1013 closer to the second current collecting area 20, and the first spacing 1014 exists between the first connection area 102 and the side of the slot body 1013 closer to the second current collecting area 20.

For example, an end of the first connection area 102 away from the second current collecting area 20 is at a first spacing 1014 from the first slot tube 1011, the second slot tube 1012 or the slot body 1013, and the first spacing 1014 is configured to prevent the first connection area 102 from being connected to the pressure relief slot 101 (such a connection may affect the continuity and integrity of the welding track 300). The end of the first connection area 102 away from the second current collecting area 20 includes a first end and a second end, the first end being at a first spacing 1014 from the first slot tube 1011 or the slot body 1013, and the second end being at a first spacing 1014 from the second slot tube 1012 or the slot body 1013. The size of the first spacing 1014 is based on the actual application, and the criterion is that the first connection area 102 does not contact the pressure relief slot 101. Moreover, the welding track 300 formed in the first connection area 102 is a continuous welding track 300, and the continuity of the welding track 300 is not affected by the formation of the pressure relief slot 101.

In some optional embodiments of the present application, the first current collecting area 10 is provided with second connection areas 103 spaced apart in the circumferential direction of the first current collecting area 10. The second connection areas 103 are configured to be connected to electrode tabs of the electric core. Each of the second connection areas 103 is disposed between two adjacent pressure relief slots 101, and the area of the first connection areas 102 is smaller than the area of the second connection areas 103.

For example, the first connection areas 102 and the second connection areas 103 provide the increased area of the welding zones and ensuring a solid welding. Since the area of the first connection areas 102 is smaller than the area of the second connection areas 103, the length of the welding track 300 formed in the first connection areas 102 is, for example, smaller than the length of the welding track 300 formed in the second connection areas 103.

For example, an end of the first connection area 102 closer to the second current collecting area 20 is at a first distance from the second current collecting area 20, and an end of the second connection area 103 closer to the second current collecting area 20 also is at a second distance from the second current collecting area 20, the first distance being equal to the second distance. Since the length of the welding track 300 formed in the first connection areas 102 is smaller than the length of the welding track 300 formed in the second connection areas 103, an end of the second connection areas 103 away from the second current collecting area 20 is closer to the center of the first current collecting area 10 than an end of the first connection areas 102 away from the second current collecting area 20 is to the center of the first current collecting area 10, and the welding track 300 formed in the second connection area 103 is also a continuous uninterrupted welding track 300.

For example, taking the circle center of the pressure relief center hole 104 as a reference, the ends of the second connection areas 103 away from the second current collecting area 20 are on the circumference of a circle with the circle center of the pressure relief center hole 104 as the center of the circle, and the diameter of the circle is, for example, 8 mm-8.6 mm, but the embodiments are not limited to this. The ends of the first connection areas 102 away from the second current collecting area 20 are on the circumference of a circle with the circle center of the pressure relief center hole 104 as the center of the circle, and the diameter of the circle is greater than 8 mm-8.6 mm, depending on the actual application. The first connection areas 102 and the second connection areas 103 are spaced apart, thereby ensuring that the first connection areas 102 and the second connection areas 103 each provide a sufficient welding zone for welding with the electrode tabs of the electric core, and the welding is more stable.

In some optional embodiments of the present application, the two opposite sides of each second connection area 103 are each at a second spacing 1015 from an adjacent pressure relief slot 101.

For example, the second connection area 103 is a welding zone located between two adjacent pressure relief slots 101. The end of the second connection area 103 away from the second current collecting area 20 is at the second spacing 1015 from each of the two adjacent pressure relief slots 101, and the length of the second spacing 1015 is selected based on the actual application, and the criterion is that the second connection area 103 does not come into contact with the pressure relief slots 101. Moreover, the welding track 300 formed in the second connection area 103 is a continuous welding track 300, and the continuity of the welding track 300 is not affected by the formation of the pressure relief slots 101.

In some optional embodiments of the present application, the first slot tube 1011 and the second slot tube 1012 each have two relatively parallel sidewalls, the first slot tube 1011 having a first sidewall and a second sidewall, the second slot tube 1012 having a third sidewall and a fourth sidewall. The spacings between the first sidewall and the second sidewall and between the third sidewall and the fourth sidewall are 0.6 mm-1.1 mm, and the lengths of the first sidewall, the second sidewall, the third sidewall and the fourth sidewall are 2.6 mm-3.9 mm.

For example, the first slot tube 1011 includes the first sidewall 1011a and the second sidewall 1011b which are relatively parallel, the first sidewall 1011a and second sidewall 1011b being of the same length; and the second slot tube 1012 includes the third sidewall 1012a and the fourth sidewall 1012b which are relatively parallel, the third sidewall 1012a and the fourth sidewall 1012b being of the same length.

In some optional embodiments of the present application, the slot body 1013 includes a first curved sidewall 1013a and a second curved sidewall 1013b disposed opposite to each other, the first curved sidewall 1013a having a diameter of 3.3 mm-4.8 mm, and the second curved sidewall 1013b having a diameter of 1.5 mm-2.5 mm, where the two ends of the first curved sidewall 1013a are connected to the first sidewall 1011a of the first slot tube 1011 and the third sidewall 1012a of the second slot tube 1012, respectively, the two ends of the second curved sidewall 1013b are connected to the second sidewall 1011b of the first slot tube 1011 and the fourth sidewall 1012b of the second slot tube 1012, respectively, and the arc lengths of the first curved sidewall 1013a and the second curved sidewall 1013b are adapted according to the actual situation.

For example, to meet the spatial requirements of the welding tracks 300, the position relationship of the first connection areas 102 and the pressure relief slots 101 and the position relationship of the second connection areas 103 and the pressure relief slots 101 need to be limited. In one embodiment, the spacing between the first sidewall 1011a and the second sidewall 1011b of each pressure relief slot 101 is 0.6 mm-1.1 mm, and the spacing between the third sidewall 1012a and the fourth sidewall 1012b of each pressure relief slot 101 is 0.6 mm-1.1 mm, i.e., the width of the first slot tube 1011 and the second slot tube 1012 is 0.6 mm-1.1 mm. For ease of description, the first sidewall 1011a and the third sidewall 1012a are collectively referred to as the first sidewall in the following, and the second sidewall 1011b and the fourth sidewall 1012b are collectively referred to as the second sidewall in the following. The length of the first sidewall and the second sidewall is 2.6 mm, the diameter of the first curved sidewall 1013a is 3.8 mm-4.8 mm, and the diameter of the second curved sidewall 1013b is 2.5 mm. The first spacing is 0.5 mm, the second spacing is greater than or equal to 0.5 mm, and the first spacing and the second spacing are arranged to ensure that the first connection areas 102 and the second connection areas 103 do not come in contact with the pressure relief slots 101 and thus the welding tracks 300 are not affected.

It is to be understood that in this embodiment, in the case where the length of the first sidewall and the second sidewall is a constant value of 2.6 mm, the spacing between the first sidewall and the second sidewall is not greater than 1.1 mm, and if the spacing is greater than 1.1 mm, the pressure relief slots 101 will contact the first connection areas 102 and the second connection areas 103, thereby affecting the welding tracks 300.

In another embodiment, when the spacing between the first sidewall and the second sidewall is 0.6 mm, the sum of the areas of the multiple pressure relief slots 101 and the pressure relief center hole 104 is 26.6 mm². When the spacing between the first sidewall and the second sidewall is 1.1 mm, the sum of the areas of the multiple pressure relief slots 101 and the pressure relief center hole 104 is 41.4 mm². That is, when the spacing between the first sidewall and the second sidewall is in the range of 0.6 mm-1.1 mm, it can be met that the sum of the pressure relief areas of the multiple pressure relief slots 101 and the pressure relief center hole 104 is not less than 26.6 mm².

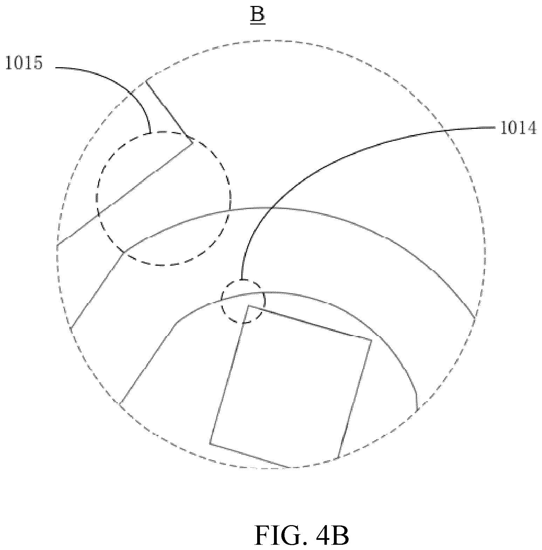

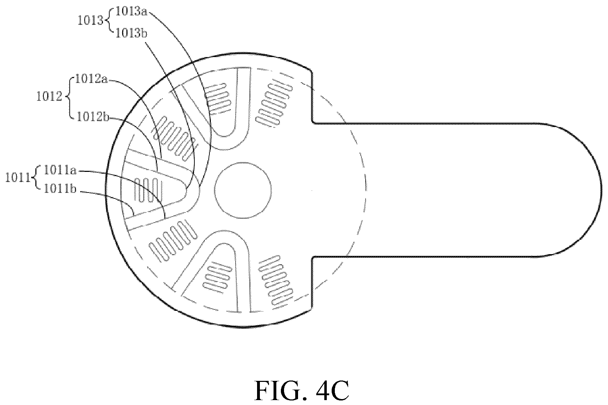

Referring to FIG. 4C, in another embodiment, the shape of the pressure relief slots 101 may also be changed, but the inclination angle of the changed pressure relief slots 101, i.e., the inclination angle between the first slot tubes 1011 and the second slot tubes 1012 in FIG. 4C, is consistent with the inclination angle between the first slot tubes 1011 and the second slot tubes 1012 in FIGS. 4A and 4B, which ensures that the pressure relief slots 101 do not come into contact with the first connection areas 102 and the second connection areas 103, and the welding tracks 300 are not affected. In this embodiment, the length of the first sidewall and the second sidewall of each pressure relief slot 101 may be 3.9 mm, the spacing between the first sidewall and the second sidewall may be 0.88 mm, the diameter of the first curved sidewall 1013a may be 3.3 mm, and the diameter of the second curved sidewall 1013b may be 1.5 mm, thereby satisfying that the sum of the pressure relief areas of the multiple pressure relief slots 101 and the pressure relief center hole 104 is not less than 26.6 mm².

In some optional embodiments of the present application, the first current collecting area 10 is provided with a pressure relief center hole 104 extending along the first direction Y. The pressure relief center hole 104 also has the functions of pressure relief and electrolyte injection.

In some optional embodiments of the present application, the shortest distance in a plane perpendicular to the first direction Y between the circle center of the pressure relief center hole 104 and each second connection area 103 is a first length, the shortest distance in the plane perpendicular to the first direction Y between the circle center of the pressure relief center hole 104 and each slot body 1013 is a second length, and the first length is less than the second length.

For example, the electrolyte falls into the current collector disk, part of the electrolyte is injected into the electric core through the pressure relief center hole 104, and the other part of the electrolyte flows, for example, along the current collector disk into the circumferentially disposed pressure relief slots 101. The pressure relief slots 101 include the curved slot bodies 1013, and the electrolyte flows, for example, along the slot bodies 1013 into the first slot tubes 1011 and the second slot tubes 1012, and then into the electric core. Therefore, the electric core is uniformly injected with the electrolyte, and the efficiency of electrolyte injection or the pressure relief efficiency is improved.

For example, when the first current collecting area 10 is a complete circle, the center position of the first current collecting area 10 is determined, and the pressure relief center hole 104 is located, for example, in the center position of the first current collecting area 10. When the position of the pressure relief center hole 104 has been determined, the connection surface A is further provided, and the conductive portion 200 is provided at the connection surface A. The ends of the second connection areas 103 away from the second current collecting area 20 are on the circumference of a circle with the circle center of the pressure relief center hole 104 as the center of the circle, and the diameter of the circle is, for example, 8 mm-8.6 mm, but the embodiments are not limited to this. The ends of the first connection areas 102 away from the second current collecting area 20 are on the circumference of a circle with the circle center of the pressure relief center hole 104 as the center of the circle, and the diameter of the circle is greater than 8 mm-8.6 mm, depending on the actual application.

In some optional embodiments of the present application, a portion of the first current collecting area 10 that is not enclosed by the second current collecting area 20 is provided with a conductive portion 200, the conductive portion 200 being connected to the first current collecting area 10.

For example, the first current collecting area 10 has a connection surface A whose normal direction is in the second direction X perpendicular to the first direction Y. The conductive portion 200 is connected to the connection surface A along the second direction X. The connection surface A is not enclosed by the second current collecting area 20.

In some optional embodiments of the present application, a side of the conductive portion 200 away from the body 100 is in a circular arc shape for avoiding blocking vents in a cap aperture plate, but the embodiments are not limited thereto.

In other optional embodiments of the present application, a battery is provided.

The battery includes a current-interrupt device, an electric core, and a current collector disk as described above, the current collector disk being connected to the current-interrupt device and the electric core separately.

For example, the current collector disk serves, for example, as a positive current collector disk. The electric core includes a positive electrode tab, a negative electrode tab, a positive electrode sheet, a negative electrode sheet, a separator, an electrolyte and other necessary parts that form the electric core. A side of the current collector disk having the first connection areas 102 and the second connection areas 103 is laser welded to the positive electrode tabs at welding positions; for example, the welding positions are the first connection areas 102 and second connection areas 103. An end of the conductive portion 200 of the current collector disk away from the body 100 is connected to the current-interrupt device.

For example, the current-interrupt device has a vent. For example, the sum of the areas of the multiple pressure relief slots 101 and the pressure relief center hole is 32.13 mm², and the area of the vent is 26.61 mm². It can be seen that 32.13 mm² > 26.61 mm², i.e., the sum of the areas of the multiple pressure relief slots 101 and the pressure relief center hole is larger than the area of the vent, which improves the pressure relief efficiency and the efficiency of electrolyte injection.

The current collector disk provided by the embodiments of the present application involves at least the following working process: the current collector disk includes the body and the conductive portion, where the body includes the first current collecting area and the second current collecting area, and the second current collecting area is disposed around at least part of the first current collecting area. The body further includes multiple pressure relief slots disposed in the first current collecting area and spaced apart in the circumferential direction of the first current collecting area. Each pressure relief slot includes a first slot tube, a second slot tube, and a slot body, and two ends of the slot body communicate with the first slot tube and the second slot tube respectively. The slot body is in an arc shape. The pressure relief slots have the function of relieving pressure and also have the function of injecting electrolyte, and the number of pressure relief slots is more than one, which also increases the area allowing pressure relief and electrolyte injection, and improves the pressure relief efficiency and the efficiency of electrolyte injection.

## Claims

1. A current collector disk, **characterized by** comprising:
a body (100) comprising a first current collecting area (10) and a second current collecting area (20), the second current collecting area (20) being disposed around at least part of the first current collecting area (10);
wherein the body (100) further comprises a plurality of pressure relief slots (101) disposed in the first current collecting area (10) and spaced apart in a circumferential direction of the first current collecting area (10); and
each of the plurality of pressure relief slots (101) comprises a first slot tube (1011), a second slot tube (1012), and a slot body (1013), two ends of the slot body (1013) communicate with the first slot tube (1011) and the second slot tube (1012) respectively, the slot body (1013) is in an arc shape, and a circle center of a circular arc, where the slot body (1013) is located, is located on a side of the slot body (1013) closer to the second current collecting area (20).

2. The current collector disk according to claim 1, wherein an end of the first slot tube (1011) and an end of the second slot tube (1012) which are away from the slot body (1013) extend to a side of the second current collecting area (20) closer to the first current collecting area (10).

3. The current collector disk according to claim 1 or 2, wherein the first current collecting area (10) is provided with a plurality of first connection areas (102) spaced apart in the circumferential direction of the first current collecting area (10), and the plurality of first connection areas (102) are configured to be connected to electrode tabs of an electric core; and
each of the plurality of first connection areas (102) is disposed between the first slot tube (1011) and the second slot tube (1012) of a corresponding pressure relief slot (101) of the plurality of pressure relief slots (101).

4. The current collector disk according to claim 3, wherein a first spacing (1014) exists between a side of each first connection area (102) and the corresponding pressure relief slot (101), the side being each of two opposite sides of the first connection area (102) that are closer to the pressure relief slot (101).

5. The current collector disk according to claim 3, wherein the first current collecting area (10) is provided with a plurality of second connection areas (103) spaced apart in the circumferential direction of the first current collecting area (10), and the plurality of second connection areas (103) are configured to be connected to electrode tabs of the electric core; and
each of the plurality of second connection areas (103) is disposed between two adjacent pressure relief slots (101) of the plurality of pressure relief slots (101), and an area of each of the plurality of first connection areas (102) is smaller than an area of each of the plurality of second connection areas (103).

6. The current collector disk according to claim 5, wherein each second connection area (103) has two opposite sides closer to the two adjacent pressure relief slots (101), and a second spacing (1015) exists between each of the two opposite sides and a closer one of the two adjacent pressure relief slots (101).

7. The current collector disk according to any one of claims 1 to 6, wherein the first slot tube (1011) comprises a first sidewall (1011a) and a second sidewall (1011b) which are relatively parallel, a spacing between the first sidewall (1011a) and the second sidewall (1011b) being 0.6 mm-1.1 mm, the first sidewall (1011a) and the second sidewall (1011b) each having a length of 2.6 mm-3.9 mm; and
the second slot tube (1012) comprises a third sidewall (1012a) and a fourth sidewall (1012b) which are relatively parallel, a spacing between the third sidewall (1012a) and the fourth sidewall (1012b) being 0.6mm-1.1mm, the third sidewall (1012a) and the fourth sidewall (1012b) each having a length of 2.6 mm-3.9 mm.

8. The current collector disk according to claim 7, wherein the slot body (1013) comprises a first curved sidewall (1013a) and a second curved sidewall (1013b) disposed opposite to each other, the first curved sidewall (1013a) having a diameter of 3.3 mm-4.8 mm, the second curved sidewall (1013b) having a diameter of 1.5 mm-2.5 mm; and
two ends of the first curved sidewall (1013a) are connected to the first sidewall (1011a) of the first slot tube (1011) and the third sidewall (1012a) of the second slot tube (1012), respectively, and two ends of the second curved sidewall (1013b) are connected to the second sidewall (1011b) of the first slot tube (1011) and the fourth sidewall (1012b) of the second slot tube (1012), respectively.

9. The current collector disk according to any one of claims 1 to 5, wherein the first current collecting area (10) is provided with a pressure relief center hole (104) extending along a first direction, and the pressure relief center hole (104) is located in a center of the second current collecting area (20) and on a side of the plurality of pressure relief slots (101) away from the second current collecting area (20).

10. The current collector disk according to claim 9, wherein the shortest distance in a plane perpendicular to the first direction between a circle center of the pressure relief center hole 104 and each second connection area (103) is a first length, the shortest distance in the plane perpendicular to the first direction between the circle center of the pressure relief center hole (104) and each slot body (1013) is a second length, and the first length is less than the second length.

11. The current collector disk according to any one of claims 1 to 10, wherein a portion of the first current collecting area (10) that is not enclosed by the second current collecting area (20) is provided with a conductive portion (200), the conductive portion (200) being connected to the first current collecting area (10).

12. The current collector disk according to claim 11, wherein a side of the conductive portion (200) away from the body (100) is in a circular arc shape.

13. A battery, **characterized by** comprising:
a current-interrupt device;
an electric core; and
a current collector disk according to any one of claims 1 to 12, the current collector disk being connected to the current-interrupt device and the electric core separately.
